# EUROPÄISCHE PATENTSCHRIFT

(11) **EP 0 804 955 B1**
(45) Veröffentlichungstag und Bekanntmachung des Hinweises auf die Patenterteilung: **25.06.2003**
(21) Anmeldenummer: 97106955.4
(22) Anmeldetag: 26.04.1997
(51) Int. Cl.: B01D 21/02, B01D 21/24

(54) **Absetzbecken**
Sedimentation basin
Bassin de décantation

(30) Priorität: 30.04.1996 DE 19617245
(43) Veröffentlichungstag der Anmeldung: 05.11.1997
(73) Patentinhaber: OMS Verwaltungs- und Beteiligungs GmbH, 65185 Wiesbaden (DE)
(72) Erfinder: Adelhütte, Hans-Hugo, 65388 Schlangenbad (DE)
(74) Vertreter: Lieke, Winfried, Dr.

(56) Entgegenhaltungen:
- DE-A- 2 730 932
- FR-A- 2 354 972
- GB-A- 395 728
- US-A- 5 217 609

## Beschreibung

Die vorliegende Erfindung betrifft ein Absetzbecken in im wesentlichen trichterförmiger Bauweise nach dem Oberbegriff des Anspruchs 1.

Bei Absetzbecken in trichterförmiger Bauweise ist im allgemeinen keine maschinelle Schlammräumung erforderlich, da absinkender Schlamm aufgrund der Trichtemeigung an den Trichterwandungen abrutscht und sich an der bodenseitigen Trichterspitze ansammelt. Von der Trichterspitze ist der Schlamm dann relativ einfach zentral abziehbar.

Die Größe der erforderlichen Oberfläche bzw. des Durchmessers eines Absetzbeckens hängt von der hydraulischen Belastung des Absetzbeckens ab. Als Faustwert für die Auslegung eines trichterförmigen Absetzbeckens sollte die Trichtertiefe in etwa dem Durchmesser entsprechen. Dies führt bei einer größeren Belastung zu einer entsprechend hohen Trichtertiefe und in Abhängigkeit der Höheneinbindung und des Untergrunds eines geplanten Absetzbeckens möglicherweise zu bautechnischen Problemen. In der Praxis kann es bereits bei einer Belastung von über 1000 EW zu Ausführungsschwierigkeiten kommen.

In der FR-A-2,354 972 ist ein Faulschlammbehälter mit einer bauchigen Form gezeigt. Der Beckenboden nimmt hier eine nicht rotationssymmetrische Struktur auf, so daß sich ein im Querschnitt keilförmiger Absatzringraum bildet, der satteldachartig zueinander geneigte, zickzackartig aufeinanderfolgende Bodenflächen bilden, deren Firstverschnittkanten radial verlaufend und gegen die vertikale Mittelachse abfallend ausgebildet sind.

Die GB-A-395,728 zeigt bereits ein Absetzbecken in im wesentlichen trichterförmiger Bauweise. Der Beckenboden nimmt einen Absetzkegel auf, in dessen Innerem eine Vorrichtung angeordnet ist, mit deren Hilfe aus dem unteren Bereich des Absetzbeckens ein Gemisch aus Schlamm und Wasser entnommen werden kann und anschließend wieder düsenartig in den unteren Bereich des Absetzbeckens ausgesprüht werden kann, um ein eventuell stattfindendes Verklumpen des abgesetzten Schlammes am Boden des Absetzbeckens zu verhindern.

In der DE-A-27 30 932 ist eine Vorrichtung zum Eindicken wäßriger Suspensionen, insbesondere von Schlämmen, aus der Kohleflotation gezeigt, das im wesentlichen aus vier miteinander verbundenen trichterförmigen Becken besteht.

Aufgabe der vorliegenden Erfindung ist es, ein Absetzbecken in im wesentlichen trichterförmiger Bauweise nach dem Oberbegriff des Anspruchs 1 anzugeben, das eine geringe Bautiefe und eine hohe hydraulische Belastung ermöglicht, wobei ein effektiver Abzug des abgesetzten Schlammes möglich ist.

Diese Aufgabe wird durch den kennzeichnenden Teil des Anspruch 1 gelöst.

Auf diese Weise kann die Bautiefe von trichterförmigen Absetzbecken verringert und dieser Typ von Absetzbecken auch bei höheren Belastungen ohne besondere Ausführungsschwierigkeiten eingesetzt werden. Das Vorsehen eines Absetzkegels innerhalb des Kegelmantels schafft ebenso wie die bekannte Bauweise eines trichterförmigen Absetzbeckens einen definierten Raum, aus dem der Schlamm abgezogen werden kann und ermöglicht ebenso die vorteilhaft vertikale Durchströmung des Absetzbeckens. Mit den vorgesehenen Neigungen des Kegelmantels des Absetzbeckens und der Mantelfläche des Absetzkegels wird ein Abrutschen des Schlamms in einen im wesentlichen ringartigen Raum am Beckenboden gewährleistet. Das Verhältnis der Höhe des Absetzkegels zu der Höhe eines durch den Kegelmantel gebildeten Kegelstumpfs beträgt vorteilhaft mindestens 0,5.
Zur gleichmäßigen Verteilung des Zulaufs in dem Absetzbecken kann ein Zulauftrichter vorgesehen sein, der den Absetzkegel an seinem dem Beckenboden gegenüberliegenden Ende unter Ausbildung eines Ringspalts übergreift. Zum Abzug von Schlamm ist in einer vorteilhaften Weiterbildung des Absetzbeckens ein Abzugstrichter über dem Absetzkegel angeordnet, der gegenüber dessen Mantelfläche beabstandet bis in die Nähe des Beckenbodens reicht und eine Öffnung gegenüber der Mantelfläche ringspaltförmig begrenzt. In einer anderen vorteilhaften Weiterbildung des Absetzbeckens sind zwischen einem den Absetzkegel übergreifenden Abzugstrichter und dem Absetzkegel Rippen vorgesehen, die in Axialrichtung des Absetzkegels verlaufende Abzugskanäle bilden. Bei derartigen Weiterbildungen des Absetzbeckens ist es für einen Schlammabzug mit Druckluft zweckmäßig, den Absetzkegel als Hohlkegel auszuführen und ihn mit über den Umfang verteilten Luftdurchtrittsöffnungen zu versehen. Zum Eintrag von Druckluft kann auch in einfacher Weise eine Lufteintragdüse an dem freien, von dem Abzugstrichter umgebenen Ende des Absetzkegels vorgesehen sein. In einer anderen Weiterbildung des Absetzbeckens sind über den Umfang des Absetzkegels verteilt und zum Beckenboden in Axialrichtung verlaufende Abzugsrohre angeordnet, über die Schlamm abgezogen werden kann. Zweckmäßigerweise ist hierbei bei Drucklufthebung in jedem Abzugsrohr ein Speiserohr zum Eintrag der Luft unter Ausbildung eines Abzugskanals vorgesehen. Als Alternative zur Drucklufthebung können die Rohre in besonders einfacher Weise mit einer Abzugspumpe verbunden sein. In einer weiteren Ausgestaltung des Absetzbeckens kann ein mit einer Abzugspumpe verbundenes Abzugsrohr für den Schlamm, das in den Bereich des Beckenbodens zwischen Absetzkegel und Kegelmantel reicht, an einem von einem Zentralantrieb rotierend angetriebenen Ausleger befestigt sein und mit diesem umlaufen.

Weitere Ausgestaltungen der Erfindung sind den Unteransprüchen und der nachfolgenden Beschreibung zu entnehmen.

Die Erfindung wird nachstehend anhand in den Abbildungen schematisch dargestellter Ausführungsbeispiele näher erläutert.
Fig. 1 zeigt schematisch einen Schnitt durch ein erstes Ausführungsbeispiel eines Absetzbeckens.
Fig. 2 zeigt ausschnittsweise eine Draufsicht auf ein zweites Ausführungsbeispiel eines Absetzbeckens.
Fig. 3 zeigt schematisch einen Schnitt durch ein drittes Ausführungsbeispiel eines Absetzbeckens.
Fig. 4 zeigt ausschnittsweise eine Draufsicht auf ein viertes Ausführungsbeispiel eines Absetzbeckens.

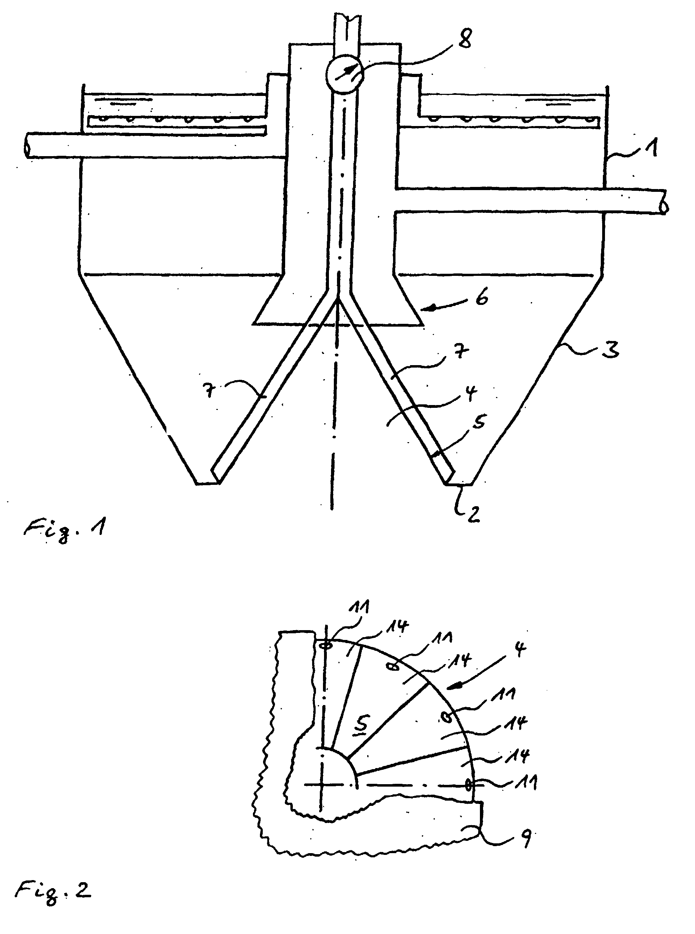

Das in Fig. 1 dargestellte Absetzbecken ist im wesentlichen trichterförmig und umfaßt einen zylinderförmigen Wandungsring 1 an den sich zum Beckenboden 2 hin ein Kegelmantel 3 anschließt. Der Innendurchmesser des durch den Kegelmantel 3 gebildeten Kegelstumpfs nimmt zum Beckenboden 2 hin ab, wobei der Kegelmantel 3 einen Winkel von 60° zur Horizontalen aufweist.

Der Beckenboden 2 nimmt einen Absetzkegel 4 auf, dessen Querschnitt in Richtung des Beckenbodens 2 zunimmt und dessen Mantelfläche 5 einen Winkel von 120° zur Horizontalen aufweist. Der Absetzkegel 4 wird von einem Zulauftrichter 6 an seinem dem Beckenboden 2 gegenüberliegenden Ende übergriffen. Über den Umfang des Absetzkegels 4 sind Abzugsrohre 7 verteilt angeordnet, die beabstandet vom Beckenboden 2 in Axialrichtung teilweise entlang der Mantelfläche 5 verlaufend zu einer Abzugspumpe 8 führen. Das Verhaltnis der Höhe des Absetzkegels 4 zu der Höhe eines durch den Kegelmantel 3 gebildeten Kegelstupfs beträgt hier in etwa 0,85. Der abgesetzte Schlamm läßt sich hierbei in einfacher Weise durch Betätigung der Abzugspumpe 8 abziehen. Versieht man die Abzugsrohre 7 mit betätigbaren Ventilen, kann gezielt aus einzelnen Abschnitten des Beckenbodens 2 Schlamm abgesaugt werden

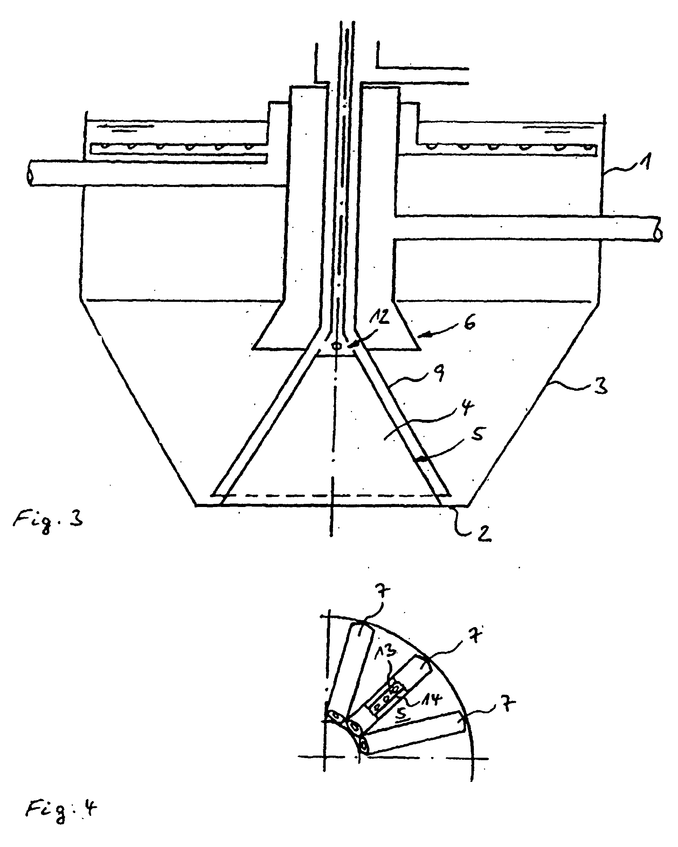

Bei dem in Fig. 2 ausschnittsweise in einer Draufsicht dargestellten Absetzbecken ist der Absetzkegel 4 von einem Abzugstrichter 9 umgeben. Der Abzugstrichter 9 ist beabstandet zu der Mantelfläche 5 angeordnet. Auf der Mantelfläche 5 sind in Axialrichtung des Absetzkegels 4 verlaufende und in Umfangsrichtung verteilte Rippen 10 vorgesehen, auf denen der Abzugstrichter 9 aufliegt. Zwischen der Mantelfläche 5 und dem Abzugstrichter 9 werden durch die Rippen 10 Abzugskanäle 14 ausgebildet. Der Absetzkegel 4 ist als Hohlkegel mit einer Vielzahl von über den Umfang verteilt angeordneten Luftdurchtrittsöffnungen 11 ausgebildet, wobei in jedem Abzugskanal 14 eine Luftdurchtrittsöffnung 11 vorgesehen ist. Bei diesem Ausführungsbeispiel kann Druckluft über nicht dargestellte, zu den Luftdurchtrittsöffnungen 11 führende Leitungen in die Abzugskanäle 14 geleitet und der Schlamm mit aufsteigenden Luftbläschen gehoben werden.

Das in Fig. 3 schematisch dargestellte Absetzbecken umfaßt einen Wandungsring 1, an den sich ein Kegelmantel 3 und ein Beckenboden 2 anschließen. Der Beckenboden 2 nimmt einen Absetzkegel 4 mit einer Mantelfläche 5 auf. Der Absetzkegel 4 ist als separates Bauteil ausgeführt. Der Kegelmantel 3 weist eine Neigung von 60° und die Mantelfläche 5 eine Neigung von 120° gegenüber der Horizontalen auf. Der Absetzkegel 4 ist von einem gegenüber der Mantelfläche 5 beabstandet angeordneten Abzugstrichter 9 umgeben. Zwischen der Mantelfläche 5 und dem Abzugstrichter 9 ist in der Nähe des Beckenbodens 2 eine ringspaltförmige Öffnung zum Schlammabzug ausgebildet. Über dem dem Beckenboden 2 gegenüberliegenden Ende des Absetzkegels 4 ist eine von dem Abzugstrichter 9 umgebene, trichterförmig ausgebildete Lufteintragsdüse 12 mit Bohrungen'vorgesehen. Das Verhältnis der Höhe des Absetzkegels 4 zu der Höhe eines durch den Kegelmantel 3 gebildeten Kegelstupfs beträgt hier in etwa 0,70. Bei diesem Ausführungsbeispiel eines Absetzbeckens wird Druckluft durch eine Zuführleitung über die Lufteintragsdüse 12 in einen zwischen der Mantelfläche 5 und dem Abzugstrichter 9 ausgebildeten und aufwärts führenden Abzugskanal geleitet und hierdurch abgesetzter Schlamm gehoben.

Bei dem in Fig. 4 ausschnittsweise in einer Draufsicht dargestellten Absetzbecken sind Abzugsrohre 7 auf der Mantelfläche 5 eines Absetzkegels 4 in Umfangsrichtung verteilt und in Axialrichtung des Absetzkegels 4 verlaufend angeordnet. Jedes Abzugsrohr 7 nimmt ein Speiserohr 13 mit Bohrungen zum Eintrag von Druckluft unter Ausbildung eines Abzugkanals 14 auf. Durch die Speiserohre 13 kann über nicht dargestellte Leitungen Druckluft in die Abzugskanäle 14 der Abzugsrohre 7 eingeleitet und der Schlamm in diesen gehoben werden.

Bei einer weiteren Ausgestaltung des Absetzbeckens ist ein Abzugsrohr 7 an einem rotierenden Ausleger befestigt, der durch einen Zentralantrieb angetrieben wird.

Bei einer exzentrischen Anordnung des Absetzkegels 4 in dem Absetzbecken und einer entsprechend steilen Neigung der Mantelfläche 5 und des Kegelmantels 3 kann man den Schlamm auch in einem relativ kleinen Abschnitt des Beckenbodens 2 konzentrieren, wobei der Schlamm gewissermaßen an den Durchdringungslinien der quasi ineinandergeschobenen Kegel entlangrutscht.

Der Absetzkegel 4 kann mit dem Kegelmantel 3 bzw. mit dem Wandungsring 1 einstückig als Hohlkegel hergestellt werden, beispielsweise durch Gießen von Beton. Er kann aber auch als Einzelteil, beispielsweise aus Kunststoff oder Metall gefertigt werden.

## Patentansprüche

1. Absetzbecken in im wesentlichen trichterförmiger Bauweise mit einem Kegelmantel (3), dessen Innendurchmesser in Richtung des Beckenbodens (2) abnimmt und der einen Winkel von wenigstens 50° zur Horizontalen aufweist, wobei der Beckenboden (2) einen Absetzkegel (4) aufnimmt, dessen Querschnitt in Richtung des Beckenbodens (2) zunimmt und dessen Mantelfläche (5) einen Winkel von höchstens 130° zur Horizontalen aufweist, **dadurch gekennzeichnet, daß** eine Abzugsvorrichtung vorgesehen ist, die derart ausgebildet ist, daß entweder der Absetzkegel (4) von einem gegenüber der Mantelfläche (5) beabstandet angeordneten Abzugstrichter (9) umgeben und in der Nähe des Beckenbodens (2) eine Öffnung zum Schlammabzug zwischen der Mantelfläche (5) und dem Abzugstrichter (9) ausgebildet ist oder der Absetzkegel (4) mit über den Umfang verteilt und zum Beckenboden (2) in Axialrichtung verlaufend angeordneten Abzugsrohren (7) versehen ist oder ein an einem durch einen Zentralantrieb rotierend angetriebenen Ausleger befestigtes, in den Bereich des Bekkenbodens (2) zwischen Absetzkegel (4) und Kegelmantel (5) reichendes Abzugsrohr (7) vorgesehen ist.

2. Absetzbecken nach Anspruch 1, **dadurch gekennzeichnet, daß** das Verhältnis der Höhe des Absetzkegels (4) zu der Höhe eines durch den Kegelmantel (3) gebildeten Kegelstumpfs mindestens 0,5 beträgt.

3. Absetzbecken nach Anspruch 1 oder 2, **dadurch gekennzeichnet, daß** ein den Absetzkegel (4) an seinem dem Beckenboden (2) gegenüberliegenden Ende übergreifender Zulauftrichter (6) vorgesehen ist.

4. Absetzbecken nach einem der Ansprüche 1 bis 3, **dadurch gekennzeichnet, daß** der Absetzkegel (4) von einem gegenüber der Mantelfläche (5) beabstandet angeordneten Abzugstrichter (9) umgeben ist und zwischen Mantelfläche (5) und Abzugstrichter (9) in Axialrichtung des Absetzkegels (4) verlaufende Rippen (10) zur Ausbildung von Abzugskanälen (14) abgesehen sind.

5. Absetzbecken nach einem der Ansprüche 3 oder 4, **dadurch gekennzeichnet, daß** der Absetzkegel (4) als Hohlkegel mit über den Umfang verteilt angeordneten Luftdurchtrittsöffnungen (11) ausgebildet ist.

6. Absetzbecken nach Anspruch 4, **dadurch gekennzeichnet, daß** über dem dem Beckenboden (2) gegenüberliegenden Ende des Absetzkegels (4) eine von dem Abzugstrichter (9) umgebene Lufteintragdüse (12) vorgesehen ist.

7. Absetzbecken nach Anspruch 6, **dadurch gekennzeichnet, daß** in einem Abzugsrohr (7) ein Speiserohr (13) zum Eintrag von Luft unter Ausbildung eines Abzugskanals (14) vorgesehen sind.

8. Absetzbecken nach Anspruch 6, **dadurch gekennzeichnet, daß** die Abzugsrohre (7) mit einer Abzugspumpe (8) verbunden sind.

## Claims

1. A settlement tank of a substantially funnel-shaped construction with a conical casing (3) whose inside diameter decreases in the direction of the tank bottom (2) and which is at an angle of at least 50° relative to the horizontal, wherein the tank bottom (2) accommodates a settlement cone (4) whose cross-section increases in the direction of the tank bottom (2) and whose peripheral surface (5) is at an angle of at most 130° relative to the horizontal, **characterised in that** there is provided a draw-off device which is of such a configuration that either the settlement cone (4) is surrounded by a draw-off funnel (9) arranged at a spacing relative to the peripheral surface (5) and an opening is provided in the proximity of the tank bottom (2) for drawing off sludge between the peripheral surface (5) and the draw-off funnel (9) or the settlement cone (4) is provided with draw-off tubes (7) arranged distributed around the periphery and extending in the axial direction relative to the tank bottom (2) or there is provided a draw-off tube (7) which is fixed to an arm driven in rotation by a central drive and which extends into the region of the tank bottom (2) between the settlement cone (4) and the cone periphery (5).

2. A settlement tank according to claim 1 **characterised in that** the ratio of the height of the settlement cone (4) to the height of a truncated cone formed by the conical casing (3) is at least 0.5.

3. A settlement tank according to claim 1 or claim 2 **characterised in that** there is provided a feed funnel (6) engaging over the settlement cone (4) at its end opposite to the tank bottom (2).

4. A settlement tank according to one of claims 1 to 3 **characterised in that** the settlement tank (4) is surrounded by a draw-off funnel (9) arranged at a spacing relative to the peripheral surface (5) and there are provided ribs (10) extending in the axial direction of the settlement cone (4) between the peripheral surface (5) and the draw-off funnel (9) for forming draw-off passages (14).

5. A settlement tank according to one of claims 3 and 4 **characterised in that** the settlement cone (4) is in the form of a hollow cone with air passage openings (11) arranged distributed around the periphery.

6. A settlement tank according to claim 4 **characterised in that** an air intake nozzle (12) surrounded by the draw-off funnel (9) is provided above the end of the settlement cone (4), which is opposite to the tank bottom (2).

7. A settlement tank according to claim 6 **characterised in that** provided in a draw-off tube (7) is a feed tube (13) for the intake of air, forming a draw-off passage (14).

8. A settlement tank according to claim 6 **characterised in that** the draw-off tubes (7) communicate with a draw-off pump (8).

## Revendications

1. Bassin de décantation de structure sensiblement en forme d'entonnoir présentant une aire latérale de cône (3) dont le diamètre diminue en direction du fond du bassin (2) et qui fait un angle d'au moins 50° par rapport à l'horizontale, le fond de bassin (2) recevant un cône de décantation (4) dont la section augmente en direction du fond de bassin (2) et dont la surface d'enveloppe (5) fait un angle tout au plus de 130° par rapport à l'horizontale, **caractérisé en ce qu'**il est prévu un dispositif d'écoulement qui est conformé de telle sorte que soit le cône de décantation (4) est entouré par un entonnoir d'évacuation (9) disposé à distance de la surface d'enveloppe (5) et une ouverture destinée à l'évacuation des boues est ménagée à proximité du fond de bassin (2), entre la surface d'enveloppe (5) et l'entonnoir d'évacuation (9), soit le cône de décantation (4) est doté de tubes d'évacuation (7) disposés de façon répartie sur la périphérie et en s'étendant axialement vers le fond de bassin (2) soit il est prévu un tube d'évacuation (7) fixé à un bras entraîné à rotation par un dispositif d'entraînement central et s'étendant dans la région du fond de bassin (2) entre le cône de décantation (4) et l'aire latérale de cône (5).

2. Bassin de décantation selon la revendication 1, **caractérisé en ce que** le rapport de la hauteur du cône de décantation (4) sur la hauteur d'un cône tronqué formé par l'aire latérale de cône (3) est d'au moins 0,5.

3. Bassin de décantation selon la revendication 1 ou 2, **caractérisé en ce qu'**il est prévu un entonnoir d'amenée monté sur le cône de décantation (4) à son extrémité opposée au fond de bassin (2).

4. Bassin de décantation selon l'une des revendications 1 à 3, **caractérisé en ce que** le cône de décantation (4) est entouré par un entonnoir d'évacuation (9) disposé à distance de la surface d'enveloppe (5) et **en ce qu'**il est prévu entre la surface d'enveloppe (5) et l'entonnoir d'évacuation (9) des nervures s'étendant dans la direction axiale du cône de décantation (4) et destinées à former des canaux d'évacuation (14).

5. Bassin de décantation selon l'une des revendications 3 ou 4, **caractérisé en ce que** le cône de décantation (4) est conformé en cône creux doté d'ouvertures de passage d'air ménagées de façon répartie sur la périphérie.

6. Bassin de décantation selon la revendication 4, **caractérisé en ce qu'**il est prévu au-dessus de l'extrémité du cône de décantation (4) qui est opposée au fond de bassin (2) une buse d'entrée d'air (12) entourée par l'entonnoir d'évacuation (9).

7. Bassin de décantation selon la revendication 6, **caractérisé en ce qu'**il est prévu dans un tube d'évacuation (7) un tube d'alimentation (13) destiné à introduire de l'air en conformant un canal d'évacuation (14).

8. Bassin de décantation selon la revendication 6, **caractérisé en ce que** le tube d'évacuation (7) est relié à une pompe d'évacuation (8).
